Europäisches Patentamt

European Patent Office

Office européen des brevets

(11) Publication number: **0 019 957**
**A1**

# (12) EUROPEAN PATENT APPLICATION

(21) Application number: **80200419.2**

(22) Date of filing: **02.05.80**

(51) Int. Cl.³: **A 22 B 3/06**

(30) Priority: **10.05.79 NL 7903678**

(43) Date of publication of application: **10.12.80**
**Bulletin 80/25**

(84) Designated Contracting States: **AT BE CH DE FR GB IT LI LU NL SE**

(71) Applicant: **MACHINEFABRIEK G.J. NIJHUIS B.V., Parallelweg 4, NL-7102 DE Winterswijk (NL)**

(72) Inventor: **Nijhuis, Johan Willem, Haitsma Mulierweg 53, Winterswijk (NL)**

(74) Representative: **van der Beek, George Frans, Ir. et al, Nederlandsch Octrooibureau P.O. Box 29720, NL-2502 LS The Hague (NL)**

(54) **An apparatus for automatically stunning animals to be slaughtered.**

(57) The invention relates to an apparatus for automatically stunning animals to be slaughtered by means of electrodes (3, 4) which swing about horizontal axis (7, 8) against spring pressure and in their initial position extend downwardly into the V-shaped passage way between two endless conveyors, said springs (11, 12) being provided with a damper.

EP 0 019 957 A1

0019957

An apparatus for automatically stunning animals to be slaughtered.

The invention relates to an apparatus for automatically stunning animals to be slaughtered, such as pigs, comprising a conveyor including two endless conveyor means said conveyor means having operating surfaces facing each other, said operating surfaces forming a substantially V-shaped passageway therebetween, and electrodes arranged in succession in the longitudinal direction of the conveyor, said electrodes being operable to swing about a horizontal shaft and being adapted to extend to said V-shaped passageway and said electrodes being adapted to be kept in the initial position thereof by means of a spring. An apparatus of this type is known from the Dutch Patent Application 77.05519 laid open to public inspection.

In this known apparatus the electrodes are pushed upward by the head of the animal to be stunned. The first electrode in the direction of movement runs across the head so that upon engagement with the second electrode a current may be passed through the head of the animal from the front to the back thereof. A proper stunning requires a short jolt of current at high voltage, which means that a very good contact should be made by the electrode. During the transportation by the conveyor the animal tries to evade the electrodes. The animal moves its head whereby additional movements are imparted to said electrodes. It has been found that a proper stunning could not always be achieved by means of the known apparatus.

The object of the invention is to provide a solution for this problem and according to the invention this object is attained in that said spring is provided with a damper, said damper damping at least the upward movement of said electrodes. A possible explanation of the faultless of the automatic stunning now achieved might be that the electrode pushed upward counteracting the resistance of the damper will maintain a good contact with the moving head of the animal. Upon passage of the stunned animal the electrodes will return quickly to the initial position thereof this being necessary because the distance between the successive animals should be kept small in order to achieve a sufficiently high production level in slaughtering. During the return to the initial position a damping is likewise desirable in order to avoid unwanted movements

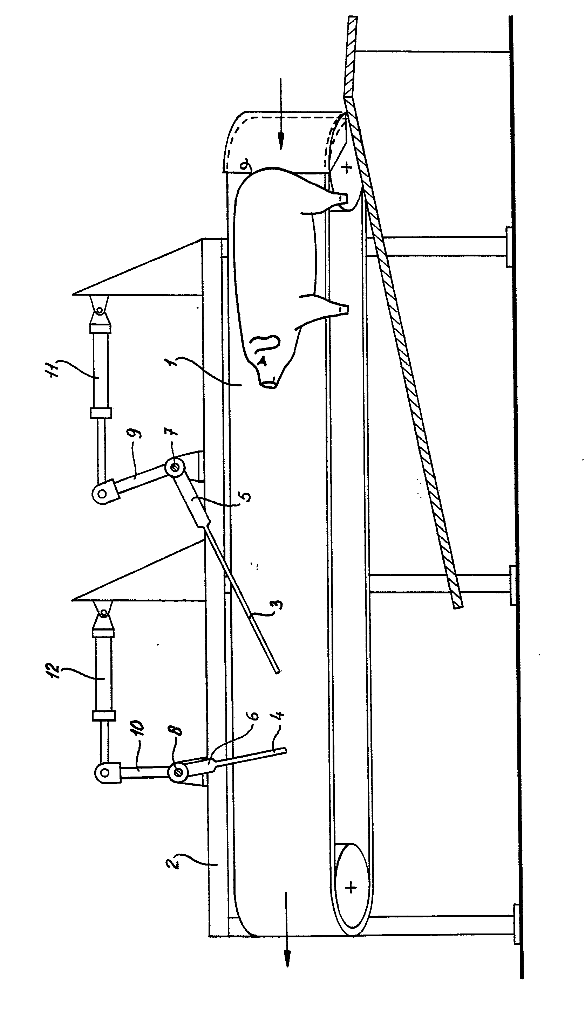

The invention will now be elucidated further in detail with reference to the drawing representing a diagrammatical cross section of the inventive apparatus.

In the drawing there has been shown one of the two conveyor means 1 which delimit a V-shaped passageway there between. Above said conveyor means there has been provided a support frame 2, not shown in further detail. Electrodes 3 and 4 are suspended from hinge joints, several separate hinging electrodes 3 and 4, respectively being provided next to each other at each position.

Each one of the electrodes 3 and 4, respectively, is provided on an arm 5 and 6, respectively, said arms being mounted hingedly on a shaft 7 and 8, respectively, and having an upward arm 9 and 10, respectively. The upper end of the arms 9 and 10 of each one of the electrode carrying arms 5 and 6, respectively, is coupled to an associated own spring 11 and 12, respectively, said spring being provided with a built-in shock absorber. There may be used springs provided with shock absorbers like the ones used for motor cycles and mopeds, such absorber springs providing a strong damping effect upon compression and a lesser degree of damping upon yielding again.

All dampers 11 and all dampers 12, respectively, may be connected to an adjustable pressure accumulator in common for each group.

(claim)

-3-

C L A I M.

An apparatus for automatically stunning animals to be slaughtered comprising a conveyor including two endless conveyor means, said conveyor means having operating surfaces facing each other, said operating surfaces forming a substantially V-shaped passageway therebetween, and electrodes arranged in succession in the longitudinal direction of the conveyor, said electrodes being operable to swing about a horizontal shaft and being adapted to extend to said V-shaped passageway and said electrodes being adapted to be kept in the initial position thereof by means of a spring c h a r a c t e r i z e d  i n  t h a t  said spring is provided with a damper, said damper damping at least the upward movement of said electrodes.

European Patent
Office

**EUROPEAN SEARCH REPORT**

0019957
Application number

EP 80 20 0419

| Category | Citation of document with indication, where appropriate, of relevant passages | Relevant to claim |
|---|---|---|
| D,A | NL - A - 77 05519 (NIJHUIS) <br> & FR - A - 2 390 903 (NIJHUIS) <br><br> ---- | 1 |

**DOCUMENTS CONSIDERED TO BE RELEVANT**

**CLASSIFICATION OF THE APPLICATION (Int. Cl. 3)**

A 22 B 3/06

**TECHNICAL FIELDS SEARCHED (Int.Cl. 3)**

A 22 B
A 22 C

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 18-08-1980 | CRUCHTEN |

EPO Form 1503.1  06.78